# EUROPEAN PATENT APPLICATION

(11) **EP 0 548 765 A2**
(43) Date of publication of application: **30.06.1993**
(21) Application number: 92121360.9
(22) Date of filing: 16.12.1992
(51) Int. Cl.: B09B 3/00, E21B 43/08

(54) **System for soil decontamination using recoverable extraction and injection probes**

(30) Priority: 20.12.1991 US 810987
(71) Applicant: Hughes Aircraft Company, Los Angeles, California 90045-0066 (US)
(72) Inventor: Braithwaite, Kathryn E., Capistrano Beach, California 92624 (US); Dablow, John F. III, Huntington Beach, California 92646 (US)
(74) Representative: Witte, Alexander, Dr.-Ing.

(57) **Abstract**

A decontamination system for decontaminating a contaminated volume of soil includes a probe (10) constructed of an elongated hollow tube (12), a point (20) formed as a helical power screw so that the probe (10) may be removable drilled into the soil, and a number of apertures (26) formed on the tube (12) for injection of a pressurized fluid into the soil for extraction of fluids and contaminants from the soil. At least one probe (10) may be used independently as an extraction probe (36) or in conjunction with at least one injection probe (34) such that contaminents (28,30,32) in the soil are forcibly drawn toward the extraction probe (36) for removal from the soil.

## Description

### BACKGROUND OF THE INVENTION

### 1. Technical Field

This invention relates generally to a system for decontaminating a contaminated volume of soil, and more particularly to a recoverable extraction and injection probe for injection or extraction of a fluid, whereby the soil is decontaminated.

### 2. Discussion

Soil and groundwater purity has become an important environmental issue. Enormous amounts of contaminants now pollute numerous toxic sites. Spurred by federal legislation, a massive clean-up is underway. A contaminated volume of soil is generally characterized by trapped lenses of contaminants located above the water table level, at or near the water table level, or below the water table level. There may also be residual contamination of lower concentrations of contaminants trapped within the pores of the soil. Liquid contaminants which are heavier than water move downward into the capillary fringe in the water table while liquids lighter than water tend to spread laterally when they encounter the fringe of the water table.

One method for cleaning up contaminated sites consists of removal of the contaminated soil. This method is bulky, impractical and slow. Another method is groundwater extraction to remove residual contamination. Groundwater withdrawal is intended to depress the water table in order to recover the spill, such as gasoline, in a separate phase. However, groundwater extraction is inefficient. The amount of free product typically recovered by this method is significantly less than the estimated amount of the spill. It cannot be predicted beforehand how much water must be pumped, for how long, or whether the pumping will be effective. Groundwater extraction may require additional equipment such as down-hole pumps or entrainment tubes.

Contaminated soil is typically decontaminated by installing at least one permanent extraction well connected to a vacuum pressure. These vacuum pressures have been typically measured in terms of inches of water. This type of vacuum extraction is effective on volatile compounds, such as gasoline or solvents, and partially effective on semi-volatile compounds, such as diesel fuel. The effectiveness of a vacuum extraction system on semi-volatile compounds is on the order of 30%. Pure vacuum extraction only volatilizes compounds with particular vapor pressures, or Henry's constants. Typical in-situ vacuum extraction systems have limited success in finely-grained soils, require over 12 months of operating time and typically can only reduce concentrations of volatile contaminants in the soil to approximately 10 parts per million.

Another technique is the injection of steam into the sub-surface to create a positive pressure gradient as well as increased sub-surface soil temperature to remove volatile and semi-volatile compounds. Steam enhanced extraction can remove other, less volatile compounds than vacuum extraction alone, but has not utilized high vacuum to forcibly assist the migration of sub-surface contaminants toward the extraction wells. The steam injection is also generally performed through permanent wells.

As a result, existing technologies have required enormous capital expenditures for permanent wells, treatment of the entire contaminated area at the same time, and over 12 months of operating time. Permanent wells are more costly to install, more difficult and costly to abandon, and limit flexibility.

### SUMMARY OF THE INVENTION

According to a preferred embodiment of the present invention, a recoverable extraction and injection probe is disclosed having a hollow tube and a point formed to be removably drilled into a contaminated volume of soil and having apertures for the injection of a pressurized fluid into the volume of soil or for extraction of fluids and contaminants from the soil. The probe may be removably attached to a drive means which is operative to rotate the probe and removably drill the probe into the soil. Each probe can be used for either injection or extraction. The probe eliminates the need for permanent wells and can be quickly installed and removed.

Accordingly, it is an object of the present invention to provide a probe which may be removably drilled into the contaminated volume of soil and may be utilized for either injection or extraction of fluids.

It is a further object to the present invention to provide a portable soil decontamination system, utilizing at least one probe for extraction independently or in conjunction with at least one probe for injection.

Additional objects, advantages and features of the present invention will become apparent from the following description and appended claims, taken in conjunction with the accompanying drawings.

### BRIEF DESCRIPTION OF THE DRAWINGS

FIG. 1 is a probe according to a preferred embodiment of the present invention.

FIG. 2 is a decontamination system for a contaminated volume of soil according to a preferred embodiment of the present invention.

### DETAILED DESCRIPT^ION OF THE PREFERRED EMBODIMENTS

The following description of the preferred embodiments is merely exemplary in nature and is in no way intended to limit the invention or its application or uses.

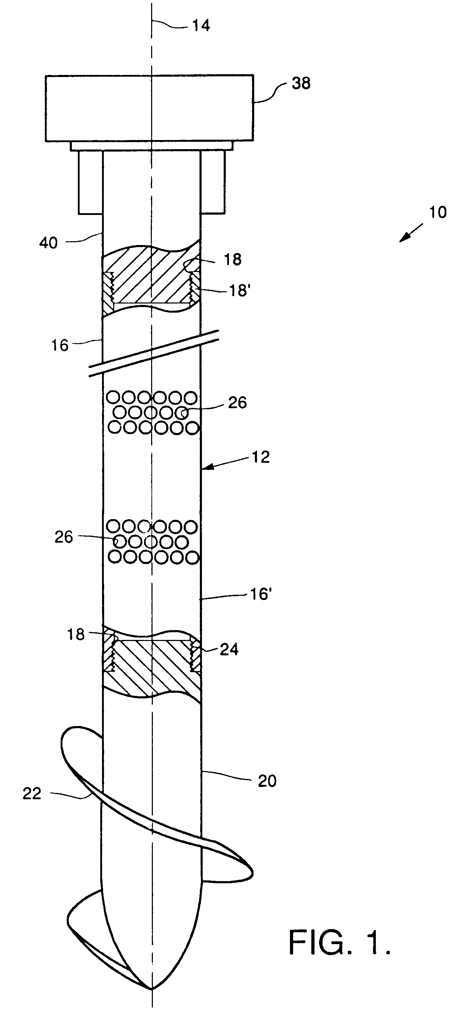

Referring to the drawings, FIG. 1 shows a probe 10 according to a preferred embodiment of the present invention. The probe 10 is constructed of an elongated hollow tube 12 having a major central axis 14. This tube 12 is preferably constructed of a round cylinder, preferably four inches (10,12 cm) in diameter. The tube 12 is constructed of numereous tubular sections 16 approximately 5 feet (12,7 cm) in length along the major axis. The various tubular sections 16 are affixed to each other end to end in a longitudinal manner, so as to form one hollow tube 12, of a length up to approximately 100 feet (2,54 m). The tubular sections 16 are preferably joined to each other by means of female screw threads 18 formed to mate with male screw threads 18' formed on the next successive tubular section 16. The lowermost tubular section 16' is affixed to a point 20 formed as a helical power screw having flights 22 formed on the exterior of the point 20. The point 20 is preferably manufactured of solid metal and is affixed to the lowermost tubular section 16' by screw threads 24 which mate with those formed on the tubular section 16'. The body of the point 20, excluding the external flights 22, is formed of the same outside diameter as the hollow tube 12.

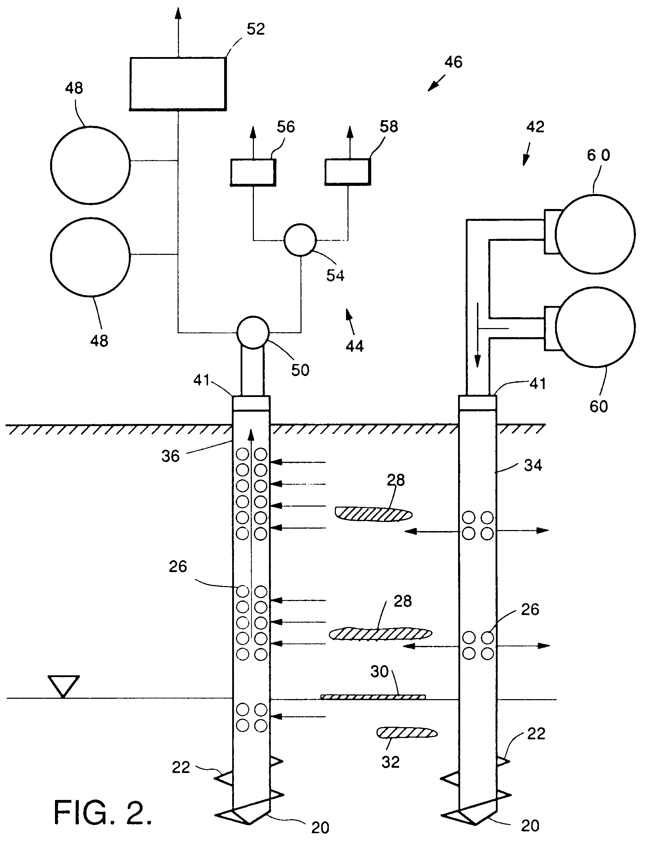

The hollow tube 12 is formed with a mulitplicity of apertures 26 at various points along the length of the hollow tube 12. The location of these apertures 26 depends upon the depths of the contaminants 28,30,32 as shown in Figure 2, in the contaminated volume of soil. The use of 5 foot (12.7 cm) sections 16 in constructing the hollow tube 12 allows the probe 10 to be greatly flexible in its applications. Because a number of sections 16 will be formed with apertures 26 and a number of sections 16 will be formed without apertures 26, the depth of the apertures 26 in the soil may be determined simply by rearranging the order of the sections. If the probe 10 is used as an injection probe 34, the apertures 26 should be located near the level of the contaminants 28,30. If steam injection is utilized, the apertures 26 should be located below the level of contaminants 28,30, because the heated steam will rise as it passes horizontally through the soil. If the probe 10 is employed as an extraction probe 36, the apertures 26 should be more generally located around the level of contaminant 28,30, or may be formed along a majority of the tube length 12.

The aptertures 26 are preferably formed on a probe used for extraction having a dimension of approximately 0.02 inches (0.5 mm), and on a probe used for injection having a dimension of approximately 0.25 inches (6.35 mm). The preferably size of the apertures 26 depends upon the porosity of the soil and various other site-specific factors. The apertures 26 are preferably formed about the perimeter of the hollow tube 12 and allow fluid flow in a direction generally orthogonal to the central axis 14. The apertures 26 may be formed variously as round holes, louvers, or elongated slots.

In operation, the probe 10 is installed as follows. The point 20 is screwed to the lower end of a preferably 5 foot (12.7 cm) long tubular section 16. The upper end 20 of the uppermost section 16 of the hollow tube 12 is affixed to a drive means 38 operative to rotate the probe 10 about its longitudinal major axis 14 so as to drill the probe 10 into the soil. The drive means 38 may be a conventional drill rig as known in the art. The drive means 38 is affixed to the hollow tube 12 preferably by the screw threads 18 formed on the uppermost end of the uppermost tubular section 16, formed to mate with those on a connector 40. The drive means 38 is utilized to drill the first tubular section 16 into the soil. The drive means 38 is detached from the first tubular section 16 and a second tubular section 16 is screwed onto the first. The process is repeated, inserting sections 16 having apertures 26 appropriately located to place the apertures 26 at the proper depth, until the point 20 of the probe 10 reaches the desired depth. The drive means 38 and the connector 40 are removed from the probe 10. Finally, depending on the desired use for the probe 10, a fluid injection system 42 or fluid extraction system 44 and a coupling 41 is attached in place of the connector 40 and drive means 38 onto the probe 10. Following remediation of the soil, the probe 10 is removed from the soil by a process in reverse of that disclosed above.

The probe of the present invention may be used in conjunction with an enhanced gradient remediation system, whereby one probe is employed for high pressure injection and one probe is used for high vacuum extraction. This combination of an enhanced negative pressure gradient from the extraction probe and an enhanced positive pressure gradient from the pressure front towards the extraction probe, and possibly increased soil temperature due to hot air or steam injection, enchances the effectiveness of remediation and results in lower overall contaminant concentrations in the soil at the conclusion of remediation. The use of high vacuum and high pressure steam injection will increase the rate at which contaminants migrate towards the extraction probe, thereby decreasing the time required to complete remediation. This method will allow rapid treatment of volatile and semi-volatile compounds even in fine-grained soils, which standard technologies fail to adequately perform. The remediation system may also be employed using only a high vacuum extraction probe independently, or with the addition of groundwater extraction. The choice of the appropriate method will depend on various site-specific factors.

An enhanced gradient remediation system 46 utilizing the probe 10 of the present invention is shown in Figure 2. the selection of the proper remediation system 46 will depend upon the characteristics of the contaminated site. An extraction probe 36, or a plurality thereof, may be employed independently. Vacuum blowers 48 operating substantially within the range of 5 to 30 inches of mercury (0.16-1 bar) extracts fluids and contaminants 28,30,32 from the contaminated volume of soil. The extract is drawn through the coupling 41 and is separated into its component phases of vapor and liquid by a liquid-vapor separator 50. The vapor is drawn by the vacuum blowers 48 into a vapor treatment system 52. Water is removed from the liquid by a separation tank 54, and the water is then treated by a water treatment system 56. The free product separated from the water is stored and recycled by an appropriate storage and recycling system 58.

The enhanced gradient vacuum extraction probe 36 may preferably be used in conjunction with at least one injection probe 34. Ambient or heated air may be forced into the injection probe 34, or more preferably steam may be injected into the soil by means of steam boilers 60. If steam is selected as the injection medium, the steam should preferably be stubstantially at a pressure within the range of 10 to 60 pounds per square inch, or 20 to 125 inches of mercury (0.7-4.2 bar). The extraction may be accompanied by groundwater removal.

The high pressure steam injection creates a steam front which forcibly washes or flushes the soil. As the steam passes through the soil, the contaminating substances 28,30,32 are carried conjunctively along with the steam in a substantially horizontal direction from the injection probe 34 towards the extraction well 36. The relatively hot steam will also rise as it passes through the soil. The high vacuum extraction of the extraction probe 36 acts to forcibly draw the injection fluid, preferably steam, and the contaminating substances 28,30,32 toward the extraction probe 36.

The probe 10 of the present invention is easily installed and removed from the soil, which eliminates the need for permanent wells and makes the entire remediation system portable. The probe 10 provides one remediation instrument capable of either injection or extraction. The probe 10 thus enables a site to be remediated in portions, or batches, rather than a total site remediation. The batch approach allows the fluid systems 42,44 to be downsized. These features lead to great savings in captital investment. The batch approach further allows flexibility so that sub-surface variations can be accomodated when they are encountered. Finally, if the batch approach is employed, an operating site such as a parking lot for shopping center need not be completely shut down for a remediation period of at least twelve months. The use of probes will reduce cost and remediation time over full scale, fixed technologies.

As is apparent, an unlimited number of configurations of the probe can be realized and still satisfy the requirements described above. The foregoing discussion discloses and describes merely exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. A probe for decontaminating a contaminated volume of soil, said probe comprising:
- a hollow, tubular member (12) having a major axis (14) and having a first and a second end;
- a point (20) affixed to said first end of said tubular member (12);
- said probe (10) being adapted to be removably inserted into said soil;
- said tubular member (12) having a plurality of apertures (26) formed on a wall of said tubular member (12) between said first and second ends, said apertures (26) being adapted to allow flow of a fluid in a direction generally orthogonal to the major axis (14);
- attachment means for removably attaching said tubular member (12) to a drive means (38) operative to rotate said tubular member (12) about said major axis (14); and
- said attachment means being adapted to removably affix said tubular member to a fluid system (42;44) operative to force a fluid through said apertures (26).

2. The probe according to claim 1, characterized in that said fluid system (42) is operative to inject a pressurized fluid out through said aptertures (26) into said volume of soil whereby a contaminating substance within said soil is carried along with said pressurized fluid in a substantially horizontal direction through said soil.

3. The probe according to claim 2, wherein said fluid system (42) is operated at a pressure substantially within the range of 20-125 inches of mercury (0.7-4.2 bar) whereby said pressurized fluid and said contaminating substance are conjunctively forced through said soil.

4. The probe according to claim 1, characterized in that said fluid system (44) is operative to extract a fluid and a contaminating substance in through said apertures (26) from said soil.

5. The probe according to claim 4, characterized in that said fluid system (44) is operated at a vacuum substantially in the range of 5-30 inches of mercury (0.16-1 bar), whereby said fluid and said contaminating substance are forcibly extracted from said soil.

6. The probe according to anyone of claims 1 through 5, characterized in that said attachement means is formed of screw threads (18') located at said second end of said tubular member (12).

7. The probe according to anyone of claims 1 through 6, characterized in that it further comprises screw threads (18) located at said first end of said tubular member (12), said point (20) having screw threads (24) formed to mate with said screw threads (18) formed on said first end of said tubular member (12) so as to affix said point (20) to said tubular member (12).

8. The probe according to anyone of claims 1 through 7, characterized in that said point (20) is formed as a helical power screw.

9. The probe according to anyone of claims 4 through 8, characterized in that said fluid system (44) further comprises separation means (50) for separating said extracted fluid into compenent parts of liquid and vapor, and treatment means (52,56) for treating said vapor and treating said liquid.

10. The probe according to anyone of claims 2 through 9, characterized in that said pressurized fluid is steam.

11. A system for decontaminating a contaminated volume of soil, said system comprises at least two probes according to anyone of claims 1 through 10, characterized by at least a first probe (34) and at least a second probe (36) spaced apart from said first probe (34), said second probe (36) being formed substantially similar to said first probe (34);
a fluid injection means (42) operative to inject a pressurized fluid into said first probe (34) out through said apertures (26) and into said volume of soil;
a fluid extraction means (44) operative to extract a fluid from said volume of soil in through apertures (26) and from said second probe (36); and
whereby said pressurized fluid is forced through said volume of soil in a substantially horizontal direction from said first probe (34) to said second probe (36), such that a contaminating substance is carried along with said pressurized fluid, said fluid extraction means (44) operative to extract said contaminant along with said fluid.
